# EUROPEAN PATENT SPECIFICATION

(11) **EP 3 484 133 B1**
(45) Date of publication and mention of the grant of the patent: **29.04.2020**
(21) Application number: 18205115.1
(22) Date of filing: 08.11.2018
(51) Int. Cl.: H04M 1/04, B60R 11/02, G06F 1/16, H04B 1/3822, H04B 1/3877, H04B 1/3888, F16M 11/04, B60R 11/00, F16M 13/00, F16M 13/02

(54) **MOBILE TERMINAL HOLDER**
HALTER FÜR MOBILES ENDGERÄT
SUPPORT DE TERMINAL MOBILE

(30) Priority: 13.11.2017 JP 2017218161
(43) Date of publication of application: 15.05.2019
(73) Proprietor: Unico Corporation, Sakai-shi, Osaka 590-0072 (JP)
(72) Inventor: TATEBE, Hiroyuki, Osaka, 590-0072 (JP)
(74) Representative: Kindermann, Peter

(56) References cited:
- EP-A1- 2 608 493
- EP-A1- 2 893 851
- WO-A1-2012/105549
- WO-A1-2013/056029
- ES-A1- 2 587 285
- US-A- 5 457 745
- US-A1- 2010 264 182
- US-A1- 2011 267 773
- US-A1- 2012 037 783
- US-B1- 9 470 356

## Description

### BACKGROUND OF THE INVENTION

The present invention relates to a mobile terminal holder for holding a mobile terminal.

In recent years, portable small-sized mobile terminals typified by smartphones are used in a fixed state, detachably fixed to a movable body such as a bicycle, a hand-driven wheel, an automobile, or a non-movable body such as a refrigerator by a dedicated holder. Those mobile terminals are in the form of a rectangular flat plate and have an operation section such as a touch panel on its front surface. As a holder for such a mobile terminal, a holding tool is known which is used on a vehicle, a motorcycle, a bicycle, and the like, and is provided with a plate member for supporting the mobile terminal from its back in contact with its rear surface, a clamp for clipping the mobile terminal from the left and right of it, and a lower side protrusion for supporting the lower end of the mobile terminal (see, for example, Patent Document 1).

Further, as a holding tool to be carried by a user, a tool is known which is provided with a rectangular support plate member and stretchable cords fitted obliquely at each of four corners of the support plate member, and each of four corners of a mobile terminal placed on the support plate member is fixed to the support plate member at each corner with the cords (see, for example, Patent Document 2). Also, as another holding tool capable of attaching and detaching a mobile terminal with one hand, a tool is known which is provided with a plate member for supporting and contacting with the rear surface of the mobile terminal, side plates for sandwiching the mobile terminal from the left and right, and a bottom plate energized upward so as to support the lower end, wherein the side plates open and close as the bottom plate is moved down and up by a user (see, for example, Patent Document 3).

### PATENT LITERATURE

Patent Document 1: JP 2013-258572A
Patent Document 2: JP 2013-192085A
Patent Document 3: Japan Utility Model Registration No. 3211364

US 2011/267773 A1, US 5 457 745 A, US 2012/037783 A1 and WO 2012/105549 A1.

### SUMMARY OF INVENTION

However, the above-described holders as shown in Patent Document 1 and Patent Document 3 hold the mobile terminal at the left and right ends and support the rear surface and the lower end, but do not support the upper end and the front surface, and therefore, it is difficult to apply them to moving bodies such as bicycles violently vibrating because there is a possibility of falling off. In addition, although the holder as shown in Patent Document 2 can hold the mobile terminal at the rear surface, the front surface, and the upper, lower, left and right ends, it is necessary to set the mobile terminal on the plate member by individually operating the cords at each of the four corners, and it is troublesome.

The present invention is intended to solve the above-described problems, and provides a mobile terminal holder that can reliably hold a mobile terminal even when applied to a moving body such as a bicycle highly vibrating and is easy to attach and detach the mobile terminal.

In order to achieve the above object, the mobile terminal holder of the present invention is as set out in claim 1, preferred forms being set out in the dependent claims 2 to 4.

According to the mobile terminal holder of the present invention, since the mobile terminal is held with its total of six surfaces including the front and rear surfaces, the upper and lower end surfaces, and the left and right end surfaces by the movable locking members provided with the elastic members, the mobile terminal can be reliably held, and the user can detachably attach the mobile terminal to the holder with one hand.

### BRIEF DESCRIPTION OF THE DRAWINGS

FIG. 1A is a perspective view of a mobile terminal holder according to the first embodiment of the present invention, and FIG. 1B is a perspective view of the holder in a state that a mobile terminal is attached to the holder.
FIG. 2A is a perspective view of the holder viewed from the rear, and FIG. 2B is a perspective view of the holder in a state that the mobile terminal is attached to the holder.
FIG. 3A is a front view of the holder, FIG. 3B is a sectional view taken along the line A-A of FIG. 3A, and FIG. 3C is a sectional view taken along the line B-B of FIG. 3A
FIG. 4A is an exploded perspective view of a locking member on the right side surface and a locking member on the right front side of the holder, and FIG. 4B is an exploded perspective view of each of the members viewed from the back side.
FIGs. 5A to 5E are cross-sectional views showing the procedure of attaching the mobile terminal to the holder in chronological order.
FIGs. 6A, 6B, and 6C are front views corresponding to FIGs. 5C, 5D and 5E, respectively.
FIG. 7A is a front view of the lower part of a mobile terminal holder according to the second embodiment, FIG. 7B is a sectional view taken along the line C-C of FIG. 7A, and FIG. 7C is a cross-sectional view of the holder in a state that a mobile terminal is attached to the holder.
FIG. 8A is a front view of a mobile terminal holder according to the third embodiment, FIG. 8B is a cross-sectional view taken along the line D-D of FIG. 8A, and FIG. 8C is a cross-sectional view of the holder in a state that a mobile terminal is attached to the holder.
FIGs. 9A, 9B and 9C are front views showing the procedure of attaching a mobile terminal to the holder in chronological order.
FIG. 10A is a perspective view of the lower portion of a mobile terminal holder according to the fourth embodiment, and FIG. 10B is a perspective view of the lower portion of the holder viewed from the rear.
FIG. 11A is a front view of the lower part of the holder, FIG. 11B is a sectional view taken along the line E-E in FIG. 11A, and FIG. 11C is a cross-sectional view of the holder in a state that a mobile terminal is attached to the holder.

### DESCRIPTION OF EMBODIMENT

### (First Embodiment)

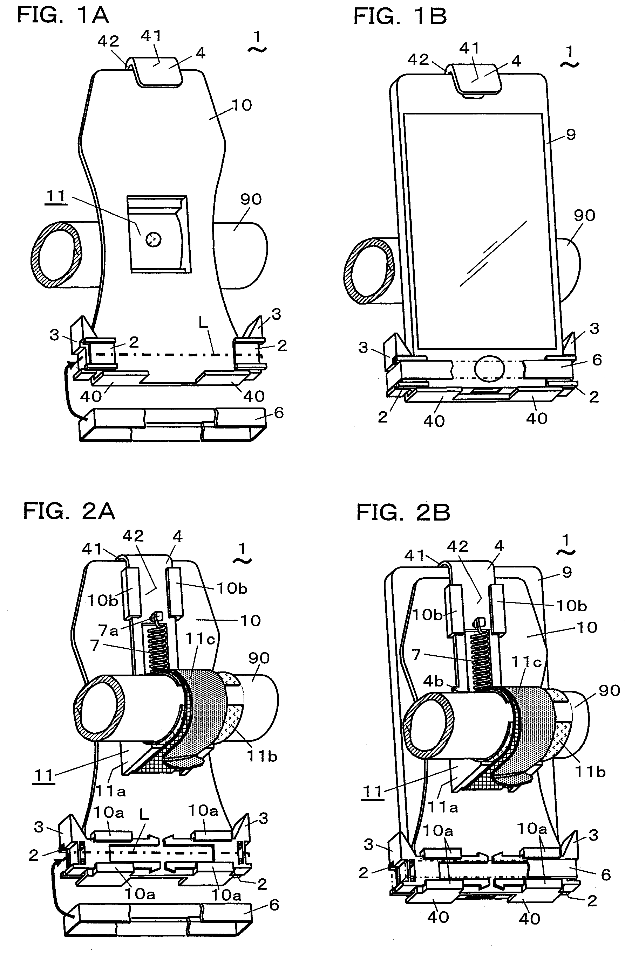

Hereinafter, a mobile terminal holder according to an embodiment of the present invention is described with reference to the drawings. Fig. 1A to Fig. 6C show the mobile terminal holder 1 of the first embodiment. As shown in Fig. 1A to Fig. 2B, the mobile terminal holder 1 is a holder that detachably holds a rectangular-plate-like mobile terminal 9 having an operation portion on the front surface. There are plural types of mobile terminals 9 having different sizes, and the mobile terminal holder 1 is applicable to all of them. The mobile terminal holder 1 has a plate member 10 on which the mobile terminal 9 is placed or from which the mobile terminal 9 is removed, an attachment member 11 for fastening the plate member 10 on a movable body or non-movable body 90, and a plurality of locking members 2, 3, 4, 40 for holding any of a plurality of types of mobile terminals 9 having different sizes.

The movable body or non-movable body 90 is, for example, a horizontal part of a circular tube extending to the left and right of the handle of a bicycle. For example, the rider of the bicycle attaches the mobile terminal holder 1 near the center of the handle and makes the mobile terminal holder 1 hold the mobile terminal 9 such as a smartphone so that the touch screen type operation screen can be operated.

The plate member 10 has an outer shape smaller than the outer shape of the mobile terminal 9 to be attached and detached, and the central portion in the longitudinal direction thereof has a narrowed design of small lateral width so as to easily handle the mobile terminal 9 without touching the plate member 10, with the fingers of the hand grasping the mobile terminal 9, when attaching and detaching the mobile terminal 9. The attachment member 11 is provided substantially at the center of the rear surface of the plate member 10.

The plurality of locking members 2, 3, 4, 40 are protruded from the front surface of the plate member 10. The locking members 2 abut on the front face of the mobile terminal 9, the locking members 3 abut on both the left and right side faces of the mobile terminal 9, the locking member 4 abuts on the upper end face of the mobile terminal 9, the locking member 40 is provided at the lower end portion of the plate member 10 and abuts on the lower end surface of the mobile terminal 9. The rear side of the mobile terminal 9 abuts on the front surface of the plate member 10, so that the mobile terminal 9 is held with its total of six surfaces including the front surface, the rear surface, upper and lower end surfaces, and right and left end surfaces. The locking members 2, 3, and 4 can move relative to the plate member 10 when the mobile terminal 9 is moved during the attaching and detaching operation, and they have an energization member 6 for the locking members 2 and 3 and an energization member 7 for the locking member 4 each of which applies an energizing force to each of the locking members in a direction hindering the movement of the mobile terminal 9. The locking members 2, 3, and 4 move when the user attaches or detaches the mobile terminal 9 to or from the mobile terminal holder 1, respectively, by an external force applied by the user to the mobile terminal 9 against the energizing force. The locking members 2, 3, 4, and 40 are configured so that the mobile terminal 9 can be attached by expanding the distances between the members and reliably held, even if the mobile terminal 9 has a thickness, a left-right dimension, and an up-down dimension considered to be the thinnest or smallest.

The locking members 2 are members (the first locking members) movable in the front-rear direction which is a direction perpendicular to the major, namely, front surface of the plate member 10, in other words, in a thickness direction of the mobile terminal 9 placed on the plate member 10, and can abut on the front face of the mobile terminal 9 placed on the plate member 10. The locking members 2 are disposed bilaterally symmetrically in an overhanging state covering the front surface of the plate member 10 at the left and right of the lower portion of the plate member 10. Each of the locking members 2 is integrated with the locking member 3 in a piggyback state for moving integrally, and the locking member 2 moves in the front-rear direction at the position where the locking member 3 is located in the left-right direction. Since the locking members 2 move integrally with the locking members 3 in the left-right direction, it is possible to always hold both left and right end portions of the mobile terminal 9 irrespective of the left-right size thereof and possible to suppress interference with the operation surface of the mobile terminal 9.

The locking members 3 are members (the second locking members) being at the left end and the right end of the plate member 10 and can abut on the left end and the right end of the mobile terminal 9, and at least one (two in the present embodiment) member is movable in the right-left direction. The locking members 3 are disposed bilaterally symmetrically at the left and right of the lower portion of the plate member 10. The locking members 3 move right and left along the guide 10a provided in the left-right direction on the rear face of the plate member 10. Each of the guides 10a is provided, corresponding to the left and right locking members 3, on the left or right of the lower portion of the rear surface of the plate member 10 so as to protrude from the plate member 10 in a pair of upper and lower sides, and the lower one of the pair is made, as continuation of the locking member 40, by protruding the locking member 40 from the front side to the rear side of the plate member 10.

In the present embodiment, the energization member 6 for energizing the locking members 2, 3 is composed of a ring-shaped elastic member for binding these locking members, for example, made of a rubber band. The energization member 6 is disposed, so as to bind the entirety of the lower portion of the plate member 10 and the four locking members 2, 3, along the outer periphery L thereof. The energization member 6 applies an energizing force in such a direction that the distance between the locking members 2 and the major surface of the plate member 10 and the distance between the left and right locking members 3 become small. The mobile terminal 9 has the front and rear thereof in its lower portion held with the locking members 2 and the plate member 10, and has the left and right thereof held with the locking members 3, using the energizing force of the energization member 6. In the present embodiment, the energization member 6 is shown as one bundling including the plate member 10, however, the energization member 6 may be of one bundling the locking members 2, 3 together without including the plate member 10.

The locking members 4, 40 (the third locking members) are respectively at the upper end and the lower end of the plate member 10 and abut on the upper end and the lower end of the mobile terminal 9, and at least one (the upper end locking member 4 in the present embodiment) is movable in the upper-lower direction. The locking member 4 is disposed at the upper center of the plate member 10. The locking member 4 has an abutting portion 41 in an overhang state covering the front side of the upper end of the plate member 10 and a flat sliding portion 42 that is continuous with the abutting portion 41 and is located on the rear side of the plate member 10. The sliding portion 42 is inserted through a pair of guides 10b, which is provided so as to protrude from the rear surface of the plate member 10, and moves upper and lower along the guides 10b. The sliding portion 42 has stopper claws 4b at its lower end for preventing the sliding portion 42 from coming out of the guides 10b. In the present embodiment, the movable locking member 4 is located at the upper end of the plate member 10, but the locking member 4 may be at the lower end.

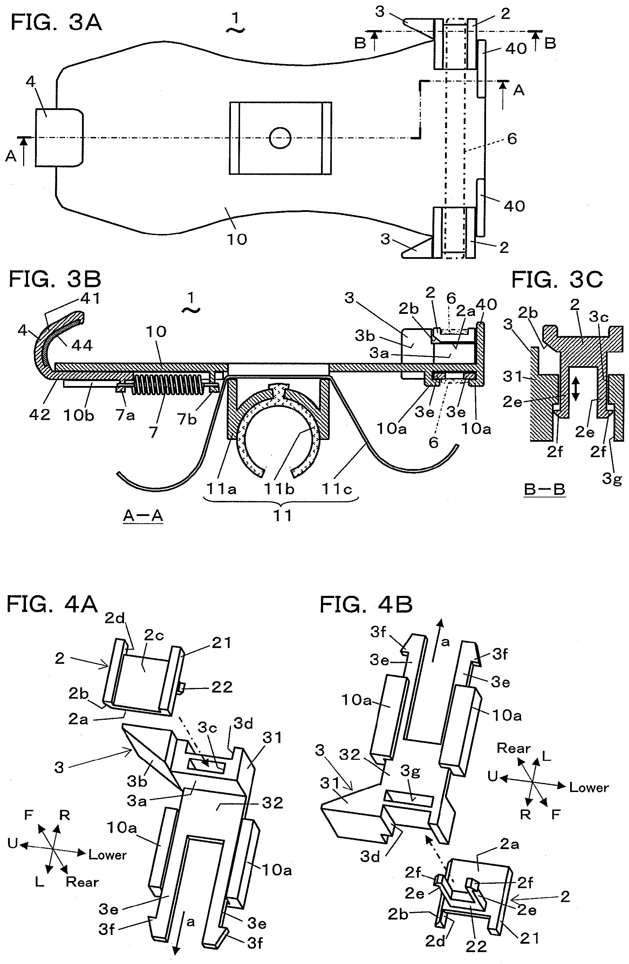

The energization member 7 for energizing the locking member 4 is, for example, a coil spring, and suspended between a supporting portion 7a provided on the sliding portion 42 and a supporting portion 7b provided on the plate member 10 in a state generating tension (see FIG. 3B). The locking member 4 applies an energizing force in such a direction that the distance between the upper and lower locking members 4, 40 becomes small.

The locking members 40 are erected in a wall shape symmetrically on the lower side of the plate member 10. The locking members 40 support the lower end of the mobile terminal 9 against the force from the mobile terminal 9 due to the energizing force of the energization member 7. The locking members 40 paired with the locking member 4 regulate the position of the mobile terminal 9 in the upper-lower direction.

The attachment member 11 includes a pillow body 11a having a groove portion for fitting to the movable body or non-movable body 90, a liner 11b arranged in the groove portion, and a binding band 11c for binding the pillow body 11a to the movable body or non-movable body 90 via the liner 11b. The liner 11b is a cushioning material and a non-slip material, for example, various rubbers formed into a sheet shape. The binding band 11c is, for example, a hook-and-loop fastener. The binding band 11c is attached to the plate member 10 through a gap between the plate member 10 and the pillow body 11a.

Next, the detailed structure of the locking members 2, 3, 4, and 40 is described with reference to Fig_{.} 3A to Fig. 4B. The locking member 2 includes a pressing portion 21 having a pressing surface 2a which is a surface parallel to the front surface of the plate member 10 and presses against the front surface of the mobile terminal 9 placed thereon, and a sliding portion 22 which is erected from the pressing surface 2a, and inserted into insertion holes 3c, 3g of the locking member 3 The pressing portion 21 includes a guide surface 2b which is a slanted surface provided on the upper side of the pressing surface 2a and guides the mobile terminal 9, and two ridges 2d extending in the left-right direction on a back surface 2c of the pressing surface 2a separated from each other at upper and lower side positions of the back surface 2c. The end of the locking member 2, i.e. the pressing portion 21, is of a hook shape for composing a mechanism that the mobile terminal 9 does not fall out of the plate member 10. Moreover, the guide surface 2b works as an entrance of the mobile terminal 9, so that the mobile terminal 9 of a different size can be inserted smoothly. The back surface 2c and the ridges 2d are for guiding the energization member 6. The guide surface 2b acts to move the locking member 2 itself due to the contact of the mobile terminal 9, when the lower part of the mobile terminal 9 is inserted, against the energizing force of the energization member 6, into the space under the guide surface 2b. The sliding portion 22 is provided with two flexible leg portions 2e and stopper claws 2f outwardly formed at each of the tips of the leg portions 2e for preventing the sliding portion 22 from coming out of the insertion holes 3c, 3g of the locking member 3.

The locking member 3 includes a prismatic pressing portion 31 having a pressing surface 3a which is pressed against the side surface of the mobile terminal 9 placed on the plate member 10, and a sliding portion 32 which is integrated with the pressing portion 31 and inserted between the pair of upper and lower guides 10a, 10a provided in the left or right of the plate member 10. The pressing portion 31 has a guide surface 3b which is a slanted surface of a right triangular prism provided on the upper side of the pressing surface 3a and guides the mobile terminal 9, and also has the insertion hole 3c, 3g in it. The guide surface 3b acts to move the locking member 3 itself, when the mobile terminal 9 is inserted between the locking members 3. The end of the locking member 3, i.e. the pressing portion 31, is of a hook shape for composing a mechanism that the mobile terminal 9 does not fall out of the plate member 10. Moreover, the guide surface 3b works as an entrance of the mobile terminal 9, so that the mobile terminal 9 of a different size can be inserted smoothly. The insertion hole 3c and the insertion hole 3g are in communication with each other with a step (see FIG. 3C) for locking with the stopper claws 2f of the locking member 2. On the back side of the pressing surface 3a, ridges 3d extending in the front-rear direction for guiding and arranging the energization member 6 is provided. The sliding portion 32 is provided with two flexible leg portions 3e and stopper claws 3f outwardly formed at each of the tips of the leg portions 3e for preventing the sliding portion 32 from coming out of the guides 10a.

The energization member 6 is disposed on the outer periphery L (see FIG. 1) containing the pressing portions 21 of the left and right locking members 2, the pressing portions 31 of the left and right locking members 3, and the left and right guides 10a, and energizes the locking members 2, 3 by the single energization member 6. The pairs of left and right guides 10a guide the energization member 6 on the rear surface side of the plate member 10 in the same manner as the pressing portions 21, 31 on the front surface side.

The locking member 4 has a liner 44 in a curved inner surface of the abutting portion 41, which serves as a slip stopper and a cushioning material by abutting on the mobile terminal 9. The abutting portion 41 has an inclined surface, wherein the end portion thereof gradually separates away from the front surface of the plate member 10 and the edge of the upper front surface of the mobile terminal 9 abuts on any position of the inclined surface, and the mobile terminal 9 is held on the plate member 10 by the energizing force caused by the energization member 7. The end of the locking member 4, i.e. the abutting portion 41, is of a hook shape for composing a mechanism that the mobile terminal 9 does not fall out of the plate member 10. Moreover, the inclined surface of the abutting portion 41 works as an entrance of the mobile terminal 9, so that the mobile terminal 9 of a different size can be inserted smoothly. By having such hook shape and inclined surface, the abutting portion 41 can accommodate and hold the mobile terminal 9 of any different thickness.

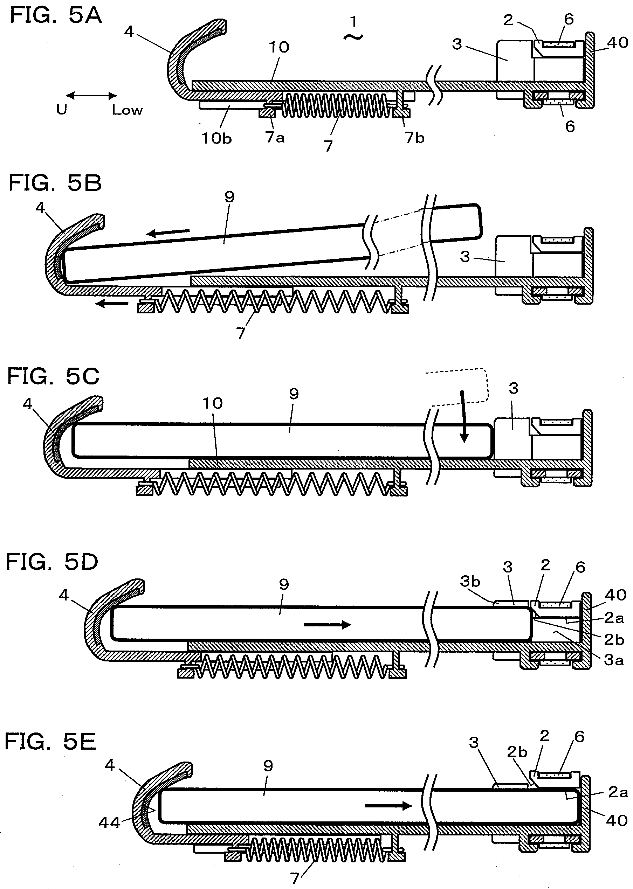

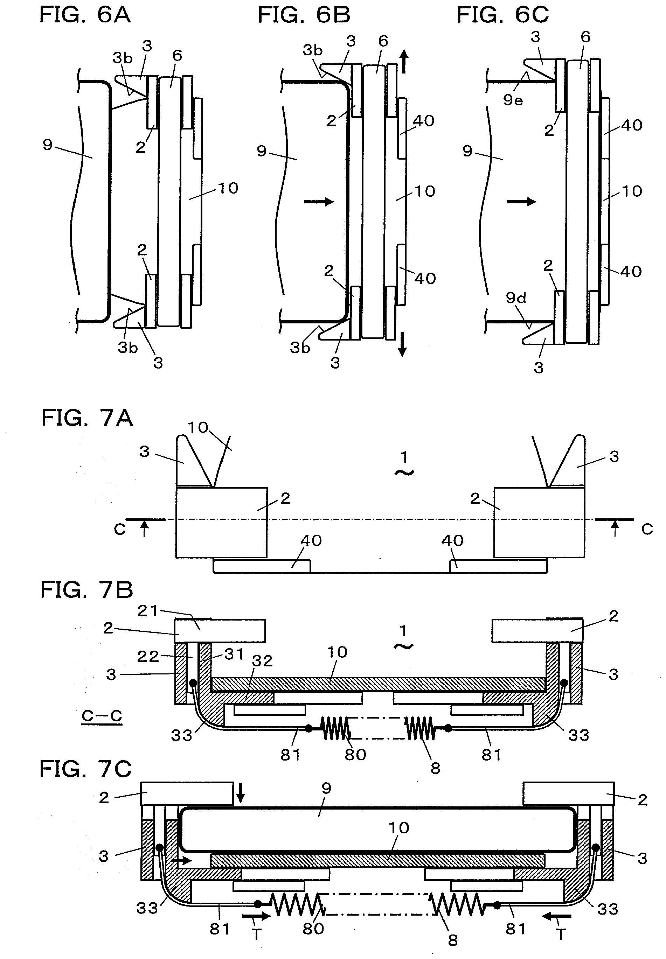

Next, referring to Fig. 5A to Fig. 6C, a procedure for attaching the mobile terminal 9 to the mobile terminal holder 1 is described. As shown in FIG. 5A and FIG. 5B, the user holds the mobile terminal 9 with one hand and brings the upper end of the mobile terminal 9 into contact with the inner surface of the locking member 4, and then the locking member 4 is moved so that the lower end of the mobile terminal 9 is located at upper side of the locking members 3. Thereafter, as shown in FIG. 5C and FIG. 6A, the lower portion of the mobile terminal 9 is put down at the left and right center of the plate member 10 and is brought into contact with the front surface of the plate member 10.

Furthermore, as shown in FIG. 5D and FIG. 6B, when the user pushes down the mobile terminal 9 toward the locking member 40 against the energizing force from the energization member 6, the locking members 3 are separated mutually from the left and the right by the action of the guide surfaces 3b. The lower portion of the mobile terminal 9 enters between the pressing surfaces 3a of the locking members 3 and the plate member 10, and comes into contact with the guide surfaces 2b of the locking members 2.

Further, as shown in FIG. 5E and FIG. 6C, as the mobile terminal 9 is pushed down, the locking members 2 are moved by the action of the guide surfaces 2b and the force received from the mobile terminal 9, and the locking members 2 guide the mobile terminal 9 into the space between the surfaces 2a and the plate member 10. The user moves the mobile terminal 9 until it comes into contact with the locking member 40, releases his / her hand from the mobile terminal 9, and the user completes the attaching of the mobile terminal 9 to the mobile terminal holder 1.

The mobile terminal 9 attached to the mobile terminal holder 1 is configured such that the locking members 2, 3, 4, 40 come in contact, respectively, with the front face, the upper and lower end faces, and the left and right end faces of the mobile terminal 9, and the front face of the plate member 10 abuts on the rear face of the mobile terminal 9, and the mobile terminal 9 is held with the energizing forces of the energization members 6, 7 applied on a total of six faces. The strength of the energizing forces of the energization member 6 and the energization member 7 may be arbitrarily set in consideration of the situation where the mobile terminal holder 1 is used, for example, it is used in an environment of how severe vibration.

The plate member 10 may be integrally manufactured by resin molding together with, for example, the guides 10a and 10b, the locking members 40 and the attachment member 11, or may be manufactured in combination with a light metal material and a resin material. The same manufacturing method applies to each of the locking members 2, 3, 4. For example, a transparent or translucent silicone rubber integrally molded product is suitably used so as not to hide the front face of the mobile terminal 9, but it is not limited to an integrally molded product of silicon rubber, but other metal or a resin or the like. The energization member 7 is not limited to the coil spring, but any elastic member that generates tension may be used.

According to the mobile terminal holder 1 of the present embodiment, since the mobile terminal 9 is held with the movable energized members 2, 3, 4, it is possible to reliably accommodate to any of the plural types of mobile terminals 9 of different sizes. Further, since the mobile terminal 9 is held, with its 6 surfaces, i.e. the front surface, the back surface, the upper and lower surfaces, and the left and right surfaces there of, by the plate member 10, the locking member 40, and the locking members 2, 3, 4 provided with the energization members 6, 7, the mobile terminal 9 can be securely held, and the attaching / detaching is easy. Since the mobile terminal 9 can be attached to the mobile terminal holder 1 by pressing the mobile terminal 9 against the guide surfaces 2b, 3b of the locking members 2, 3, it can be easily attached and detached with one hand.

### (Second Embodiment)

Fig. 7A to Fig. 7C show the mobile terminal holder 1 of the second embodiment. The mobile terminal holder 1 of this embodiment is different from the mobile terminal holder 1 of the first embodiment in the configuration for energizing the locking members 2, 3, and the other configuration is the same. In the mobile terminal holder 1, an energization member 8 for collectively energizing the locking members 2, 3 is provided on the rear side of the plate member 10. The energization member 8 includes an elastic member 80 that generates tension, and two transmission members 81 that are connected to both ends of the elastic member 80, respectively.

The elastic member 80 is, for example, a coil spring. The transmission member 81 is a cord-like or sheet-like member having no elasticity, and transmits the tension of the elastic member 80 to the locking members 2, 3. One end of each transmission member 81 is connected to the end portion of the elastic member 80 and the other end is connected to the end portion of the sliding portion 22 of the locking member 2. The locking member 3 has, in a part of the sliding portion 32 thereof, a curved surface 33, which is brought into contact with the middle of the transmission member 81 and bends the path of the transmission member 81 between both ends at right angles. The curved surface 33 has a cylindrical curved surface, and makes the the transmission member 81 slide, by changing the direction in the middle portion thereof, along the curved surface. The curved surface 33 may be constituted by a rotating body such as a pulley.

The locking member 2 receives the tension T of the elastic member 80 from the transmission member 81 and exerts a pressing force to the mobile terminal 9 placed on the plate member 10 in a direction perpendicular to the front surface of the plate member 10. In addition, the locking member 3 exerts a leftward and rightward pressing force based on the tension T to the left and right side surfaces of the mobile terminal 9 via the action of the transmitting member 81 and the curved surface 33 and others. The mobile terminal holder 1 energizes the locking members 2, 3 by the energization member 8, and holds the mobile terminal 9 from the left and right sides, the front side, and the rear side thereof.

### (Third Embodiment)

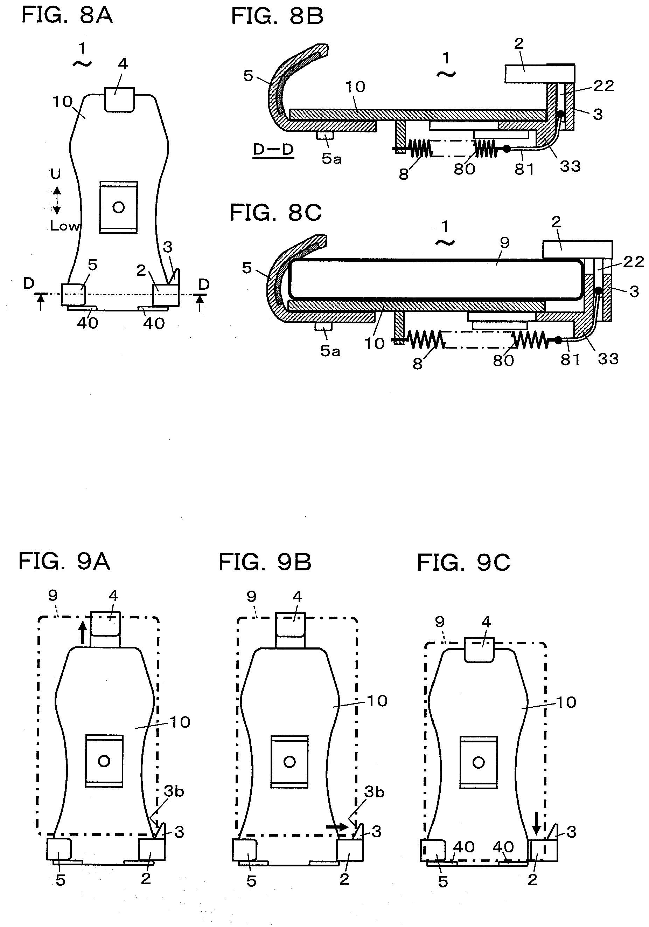

Fig. 8A to Fig. 9C show the mobile terminal holder 1 of the third embodiment. As shown in Fig. 8A to Fig. 8C, the mobile terminal holder 1 of this embodiment has only one pair of the movable locking members 2, 3 on the right side, different from the mobile terminal holder 1 of the first embodiment which has the pairs on both the left and right sides. The locking member 5 on the left side is, for example, a locking member similar to the locking member 4 in the first embodiment, however it is modified to be a semi-fixed structure so that the fixing position with respect to the plate member 10 is adjustable. The locking member 5 is fixed to the rear surface of the plate member 10 by the fixing screw 5a, and the fixing position can be adjusted by loosening the fixing screw 5a.

Further, the movable locking members 2, 3 on the right side are energized by using, for example, the energization member 8 of the mobile terminal holder 1 of the second embodiment. One end of the elastic member 80 is directly fixed to the plate member 10 and the other end is connected to an end portion of the sliding portion 22 of the locking member 2.

The attaching of the mobile terminal 9 to the mobile terminal holder 1 is done, initially, as shown in FIG. 9A, by moving the upper locking member 4 upward using the mobile terminal 9, and the mobile terminal 9 is located at the position where the lower right corner thereof abuts the guide surface 3b of the locking member 3. Next, as shown in FIG. 9B, by moving the mobile terminal 9 to the right, the locking member 3 is moved rightward so that the left end of the mobile terminal 9 can move inside the locking member 5. Finally, as shown in FIG. 9C, the mobile terminal 9 is moved in the lower direction and the mobile terminal 9 is inserted between the locking member 2 and the plate member 10, between the locking member 5 and the plate member 10, and between the locking member 5 and the locking member 3, and thus the attaching of the mobile terminal 9 is completed.

### (Fourth Embodiment)

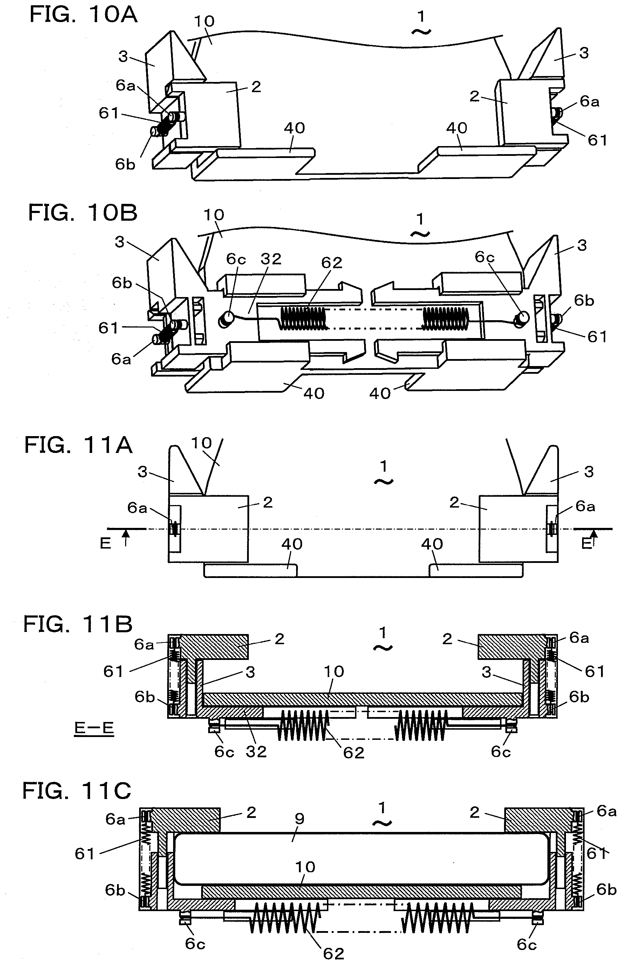

Fig. 10A to Fig. 11C show the mobile terminal holder 1 of the fourth embodiment. The mobile terminal holder 1 of this embodiment comprises two energization members 61 for the left and right sides for the locking members 2 and one energization member 62 for the locking members 3, instead of the ring-like energization member 6 common to the locking members 2, 3 in the mobile terminal holder 1 of the first embodiment. In this embodiment, the energization members 61, 62 are coil springs and used in such a manner that tension is generated between the both ends of the coil spring. The energization members 61, 62 are not limited to coil springs, and may be made of any elastic material capable of generating tension, for example, rubber, rubber bands, O-rings or the like may be used.

The energization member 61 on the left side is suspended between the protruded support portion 6a provided on the left side surface of the locking member 2 and the protruded support portion 6b provided on the lower portion of the left side surface of the locking member 3, in a state generating tension. Similarly to the left energization member 61, the right energization member 61 is suspended on the right side surfaces of the locking members 2, 3. Each energization member 61 applies an energizing force in such a direction that the distance between the locking members 2, 3 becomes small. Since the locking member 3 is provided on the rear surface of the plate member 10, the locking member 2 is impressed with energizing force in a direction that the distance to the surface of the plate member 10 decreases. Instead of either or both of the protruding support portions 6a, 6b, a hole or a recess portion may be provided in the locking member 2 or 3, and the end portion of the energization member 61 may be supported by the hole or the recess portion.

The energization member 62 is suspended between the protruded support portions 6c, 6c provided on the sliding portions 32 of the left and right locking members 3 in a state of generating tension. The energization member 62 applies an energizing force in such a direction that the distance between the locking members 3, 3 becomes small. Instead of the protruding support portion 6c, a hole or a recess portion may be provided in the locking member 3, and the end portion of the energization member 62 may be supported by the hole or the recess portion.

According to the mobile terminal holder 1 of the present embodiment, unlike the ring-shaped energization member 6, the energization members 61, 62 are at the side-face side and the rear-face side of the mobile terminal 9 but not on the front-face, and therefore, the field of view of the display screen of the mobile terminal can be widened. Since the energization members 61, 62 are independent from each other, the degree of freedom of design is high, and the tension can be appropriately set according to the use of the mobile terminal holder 1.

It is to be noted that the present invention is not limited to the above configurations.

For example, in the mobile terminal holder 1 of the first embodiment, each protruding amount by which the locking member 3 protrudes toward the upper locking member 4 is made different on the left and right, for example, small protrusion for the left locking member 3 and large protrusion for the right locking member 3, and thus the mobile terminal 9 may be attached in the same procedure of the third embodiment. In this case, even if the mobile terminal 9 has a lateral width greater than the maximum distance between the guide surfaces 3b of the left and right locking members 3 in the non-holding state, user can easily insert the mobile terminal 9 with one hand between the right and left locking members 3.

In each of the embodiments, the locking members 4 may be replaced with a structure similar to the locking member 2 having an energization member, instead of the inclined surface for contacting the edge of the upper front face of the mobile terminal 9, so that the structure holds the upper front face, instead of edge, of the mobile terminal 9. The locking member 2 may be provided in the locking member 40 fixed to the plate member 10, instead of providing the locking member 2 in the locking member 3.

In the example in each of the embodiments described above, it is shown that the movable locking members 2, 3 are energized by the common energization member 6 or the energization member 8, but the locking member 2 and the locking member 3 may be energized by individual energization member, respectively. The locking member which is not movable, among the plurality of the locking members, for example, the locking member 40, may have a semi-fixed structure by screws or the like so that the fixing position with respect to the plate member 10 is adjustable. The attachment member 11 may include a swinging mechanism capable of changing the attitude of the plate member 10 with respect to the movable body or non-movable body 90, and / or a rotation mechanism capable of rotating the mobile terminal 9 by 90 degrees, etc., and the plate member 10 and the attachment member 11 may be detachable. The attachment member 11 may have a structure for attaching the plate member 10 to the movable body or non-movable body 90 by screwing or others, instead of attaching the plate member 10 by the binding band 11c. Further, the attachment member 11 may have a structure for fastening the plate member 10 on a movable body such as a barrow, a car, or a non-movable body such as a refrigerator, not limited to a bicycle.

### EXPLANATION OF LETTERS OR NUMERALS

- 1: Mobile terminal holder
- 2: Locking member (the first locking member)
- 2b: Guide surface
- 3: Locking member (the second locking member)
- 3b: Guide surface
- 4: Locking member (the third locking member)
- 40: Locking member (the third locking member)
- 5: Locking member (the second locking member)
- 6: Energization member
- 61: Energization member
- 62: Energization member
- 7: Energization member
- 8: Energization member
- 9: Mobile terminal
- 10: Plate member
- 11: Attachment member
- 90: Movable body or non-movable body

## Claims

1. A mobile terminal holder (1) for detachably holding a mobile terminal (9) on a movable body or non-movable body (90), comprising:
a plate member (10) on which the mobile terminal (9) is detachably placed;
an attachment member (11) for fastening the plate member (10) on the movable body or non-movable body (90); and
a plurality of locking members (2, 3, 4) provided on the plate member (10), arranged for holding any of a plurality of types of the mobile terminals (9) having different sizes on the plate member (10), wherein
the plurality of locking members (2, 3, 4) include:
a first locking member (2) movable in a thickness direction of the mobile terminal (9) placed on the plate member (10), and abutting on the front surface of the mobile terminal (9) placed on the plate member (10);
a second locking member (3) provided at the left end and the right end of the plate member (10), abutting on the left end and the right end of the mobile terminal (9) placed on the plate member (10), and at least one of which is movable in the left-right direction; and
a third locking member (4) provided at the upper end and the lower end of the plate member (10), abutting on the upper end and the lower end of the mobile terminal (9) placed on the plate member (10), and at least one of which is movable in the upper-lower direction, wherein
the first, second, and third locking members (2, 3, 4) includes an elastic member (6, 7, 8) configured to apply a tension force to the locking member (2, 3, 4), respectively, in a direction in which the distance to the plate member (10), the distance between the right and left, and the distance between the upper and lower become small,
the first locking member (2) is configured to move integrally with the second locking member (3),
the first and second locking members (2, 3) have guide surfaces (2b, 3b) slanted against the front, right or left side surfaces of the mobile terminal (9) placed and moved on the plate member (10), said guide surfaces (2b,3b) are configured to move the first and second locking members (2, 3) themselves when the mobile terminal (9) comes into contact with the first and second locking members (2, 3), wherein
the first and second locking members (2, 3) and the plate member (10) are arranged for holding the mobile terminal (9) among the members (2, 3, 10) which have mutual distances expanded by the mobile terminal (9) itself.

2. The mobile terminal holder according to claim 1, wherein the elastic member (6) for tensioning the first and second locking members (2, 3) comprises a ring-shaped elastic member for binding the locking members.

3. The mobile terminal holder according to claim 1 or 2, wherein the attachment member (11) is fixed to a handle (90) or frame of the movable body or non-movable body.

4. The mobile terminal holder according to any one of claims 1 to 3, wherein the attachment member (11) includes a swinging mechanism or a rotation mechanism arranged for changing an attitude of the plate member (10) with respect to the movable body or non-movable body.

## Patentansprüche

1. Halterung (1) für ein mobiles Endgerät zum abnehmbaren Halten eines mobilen Endgeräts (9) an einem beweglichen Körper oder einem nicht beweglichen Körper (90), umfassend:
ein Plattenelement (10), auf dem das mobile Endgerät (9) abnehmbar angeordnet ist;
ein Befestigungselement (11) zum Befestigen des Plattenelements (10) an dem beweglichen Körper oder dem nicht beweglichen Körper (90); und
einer Vielzahl von auf dem Plattenelement (10) vorgesehenen Verriegelungselementen (2, 3, 4), die in der Lage sind, eine aus einer Vielzahl von Arten von mobilen Endgeräten (9) mit unterschiedlichen Größen an dem Plattenelement (10) zu halten, wobei
die Vielzahl von Verriegelungselementen (2, 3, 4) umfassen:
ein erstes Verriegelungselement (2), das in einer Dickenrichtung des auf dem Plattenelement (10) angeordneten mobilen Endgeräts (9) bewegbar ist, und das an der Vorderseite des auf dem Plattenelement (10) angeordneten mobilen Endgeräts (9) anliegt;
ein zweites Verriegelungselement (3), das am linken Ende und am rechten Ende des Plattenelements (10) vorgesehen ist und am linken Ende und am rechten Ende des auf dem Plattenelement (10) angeordneten mobilen Endgeräts (9) anliegt, und von dem zumindest eines in einer links-rechts-Richtung beweglich ist; und
ein drittes Verriegelungselement (4), das am oberen Ende und am unteren Ende des Plattenelements (10) vorgesehen ist, und an dem oberen Ende und dem unteren Ende des auf dem Plattenelement (10) angeordneten mobilen Endgeräts (9) anliegt, und von dem zumindest eines in einer oben-unten-Richtung beweglich ist, wobei
jedes der ersten, zweiten und dritten Verriegelungselemente (2, 3, 4) ein elastisches Element (6, 7, 8) enthält, das konfiguriert ist, um eine Zugkraft auf das Verriegelungselement (2, 3, 4) in einer jeweiligen Richtung auszuüben, in der der Abstand zum Plattenelement (10), der Abstand zwischen dem rechten und dem linken, und der Abstand zwischen dem oberen und dem unteren klein wird,
wobei das erste Verriegelungselement (2) konfiguriert ist, um sich ganzheitlich mit dem zweiten Verriegelungselement (3) zu bewegen,
wobei das erste und das zweite Verriegelungselement (2, 3) Führungsflächen (2b, 3b) aufweisen, die gegen die vordere, rechte oder linke Seitenflächen des auf dem Plattenelement (10) angeordneten und darauf bewegten mobilen Endgeräts (9) abgeschrägt sind, wobei die Führungsflächen (2b, 3b) konfiguriert sind, um das erste und das zweite Verriegelungselement (2, 3) selbst zu bewegen, wenn das mobile Endgerät (9) mit dem ersten und dem zweiten Verriegelungselement (2, 3) in Kontakt kommt, wobei
die ersten und die zweiten Verriegelungselemente (2, 3) und das Plattenelement (10) zum Halten des mobilen Endgeräts (9) zwischen den Elementen (2, 3, 10) angeordnet sind, die wechselseitige durch das mobile Endgerät (9) selbst ausgedehnte Abstände aufweisen.

2. Halterung (1) für ein mobiles Endgerät nach Patentanspruch 1, wobei das elastische Element (6) zum Spannen des ersten und zweiten Verriegelungselements (2, 3) ein ringförmiges elastisches Element zum Verbinden der Verriegelungselemente umfasst.

3. Halterung (1) für ein mobiles Endgerät nach Patentanspruch 1 oder 2, wobei das Befestigungselement (13) an einem Griff (90) oder Rahmen des beweglichen Körpers oder des nicht beweglichen Körpers befestigt ist.

4. Halterung (1) für ein mobiles Endgerät nach einem der Patentansprüche 1 bis 3, wobei das Befestigungselement (11) einen Schwenkmechanismus oder einen Drehmechanismus umfasst, der eine Stellung des Plattenelements (10) in Bezug auf den beweglichen Körper oder den nicht beweglichen Körper ändert.

## Revendications

1. Support de terminal mobile (1) destiné à maintenir de manière amovible un terminal mobile (9) sur un corps mobile ou un corps non mobile (90), comprenant :
un élément plaque (10) sur lequel le terminal mobile (9) est placé de manière amovible ;
un élément de fixation (11) pour fixer l'élément plaque (10) sur le corps mobile ou le corps non mobile (90) ; et
une pluralité d'éléments de verrouillage (2, 3, 4) situés sur l'élément plaque (10), conçus pour maintenir l'un quelconque d'une pluralité de types de terminaux mobiles (9) ayant des tailles différentes sur l'élément plaque (10),
la pluralité d'éléments de verrouillage (2, 3, 4) comprenant :
un premier élément de verrouillage (2) mobile dans le sens de l'épaisseur du terminal mobile (9) placé sur l'élément plaque (10), et venant en butée sur la surface avant du terminal mobile (9) placé sur l'élément plaque (10) ;
un deuxième élément de verrouillage (3) situé au niveau de l'extrémité gauche et de l'extrémité droite de l'élément plaque (10), venant en butée sur l'extrémité gauche et l'extrémité droite du terminal mobile (9) placé sur l'élément plaque (10), et dont au moins une est mobile dans la direction gauche-droite ; et
un troisième élément de verrouillage (4) situé au niveau de l'extrémité supérieure et de l'extrémité inférieure de l'élément plaque (10), venant en butée sur l'extrémité supérieure et l'extrémité inférieure du terminal mobile (9) placé sur l'élément plaque (10), et dont au moins une est mobile dans la direction haut-bas,
les premier, deuxième et troisième éléments de verrouillage (2, 3, 4) comprenant un élément élastique (6, 7, 8) conçu pour appliquer une force de tension à l'élément de verrouillage (2, 3, 4), respectivement, dans une direction dans laquelle la distance à l'élément plaque (10), la distance entre la droite et la gauche, et la distance entre le haut et le bas deviennent faibles,
le premier élément de verrouillage (2) étant conçu pour se déplacer intégralement avec le deuxième élément de verrouillage (3),
les premier et deuxième éléments de verrouillage (2, 3) ayant des surfaces de guidage (2b, 3b) inclinées contre les surfaces latérales avant, droite ou gauche du terminal mobile (9) placé et déplacé sur l'élément plaque (10), lesdites surfaces de guidage (2b, 3b) étant conçues pour déplacer les premier et deuxième éléments de verrouillage (2, 3) elles-mêmes lorsque le terminal mobile (9) entre en contact avec les premier et deuxième éléments de verrouillage (2, 3),
les premier et deuxième éléments de verrouillage (2, 3) et l'élément plaque (10) étant disposés pour maintenir le terminal mobile (9) parmi les éléments (2, 3, 10) qui ont des distances mutuelles augmentées par le terminal mobile (9) lui-même.

2. Support de terminal mobile selon la revendication 1, l'élément élastique (6) pour tendre les premier et deuxième éléments de verrouillage (2, 3) comprenant un élément élastique en forme d'anneau pour lier les éléments de verrouillage.

3. Support de terminal mobile selon la revendication 1 ou 2, l'élément de fixation (11) étant fixé à une poignée (90) ou à un cadre du corps mobile ou du corps non mobile.

4. Support de terminal mobile selon l'une quelconque des revendications 1 à 3, l'élément de fixation (11) comprenant un mécanisme d'oscillation ou un mécanisme de rotation conçu pour changer une attitude de l'élément plaque (10) par rapport au corps mobile ou au corps non mobile.
